# EUROPEAN PATENT APPLICATION

(11) **EP 2 018 977 A1**
(43) Date of publication of application: **28.01.2009**
(21) Application number: 07742809.2
(22) Date of filing: 02.05.2007
(51) Int. Cl.: B60C 9/20, B29D 30/30, B60C 9/22

(54) **PNEUMATIC TIRE AND METHOD FOR PRODUCING THE SAME**

(30) Priority: 17.05.2006 JP 2006137575
(71) Applicant: Bridgestone Corporation, Tokyo 104-8430 (JP)
(72) Inventor: YOSHIMI, Takuya, Kodaira-shi, Tokyo 187-8531 (JP)
(74) Representative: Whalley, Kevin
(86) International application number: PCT/JP2007/059374
(87) International publication number: WO 2007/132680

(57) **Abstract**

There is provided a pneumatic tire capable of effectively preventing breakdown in the tread side portions by restraining the difference of the amount of radial expansion in the tread central portion and the tread side portions of the belt reinforcing layer.

The pneumatic tire according to the present invention comprises a tread portion 1, a pair of sidewall portions 2, bead portions 3, a carcass 5 toroidally extending between the both of the bead portions, a belt 6 disposed on an outer circumference of a crown area of this carcass 5, and a belt reinforcing layer 7 formed by spirally winding one or more cords in an axial direction of the tire and covering the full width of the belt 6 on an outer circumference of the belt 6, wherein the cord of the belt reinforcing layer 7 is formed by twisting low elastic fibers and high elastic fibers to have a low elastic region and a high elastic region in a stress-strain curve, both of the belt reinforcing layer cord in a tread central region w₀ including a tire equatorial plane E and the belt reinforcing layer cord in tread side regions w₁ have residual tension of a range between 40N and 100N per cord and difference in the residual tension of the belt reinforcing layer cord in the tread central region w₀ and the belt reinforcing layer cord in the tread side regions w₁ is not more than 20N.

## Description

### TECHNICAL FIELD

The present invention relates to a pneumatic tire, particularly to a pneumatic radial tire and a method for producing same. The present invention is particularly intended to provide technology for improving high-speed durability and abrasion resistance.

### RELATED ART

It has been conventionally known that, in a tread portion of a tire on an outer circumference of a belt is disposed a belt reinforcing layer consisting of one or more caps covering the full width of the belt and/or one or more layers covering a part of the width of the belt. In this case, as a cord for forming the belt reinforcing layer, for example, a cord consisting of low elastic organic fibers such as nylon, polyethylene terephthalate or the like or a cord consisting of high elastic organic fibers such as polyethylene naphthalate, aromatic polyamide, composite material of aromatic polyamide and nylon or the like has been widely used.

A high elastic cord is often used in a so-called high performance tire, for which increasing driving stability and high-speed durability are required in order to further enhance a force for binding to the belt.

### DISCLOSURE OF THE INVENTION

In a normal tire, the circumferential length of a tread portion in its central region including a tire equatorial plane is larger than that in tread side regions. Thus, for example, in the case of building a green tire, especially in the case of building a belt reinforcing layer member on a cylindrical building drum having a uniform outer diameter over the entire axial length of the drum, the belt reinforcing layer member is largely expanded in vulcanization molding of a green tire, particularly in a region corresponding to a central portion including an equatorial plane of a product tire. As a result, the belt reinforcing layer cord of the product tire has much larger residual tension in the tread central portion than that in the tread side portions, so that a hoop effect with respect to the tread side portion is relatively insufficient. Therefore, there has been a problem that the amount of radial expansion of the tread side portion is increased during high-speed running of a vehicle to easily cause breakdown and the like.

It is noted that the term "residual tension of a belt reinforcing layer cord" as used in the specification and claims means tension necessary for extending a belt reinforcing layer cord, which was taken out from a product tire to be constricted, up to its original length when the cord existed inside the tire.

The measurement of such residual tension can be performed in such a manner that tread rubber of a tire is removed to expose a belt reinforcing layer, cord(s) of the belt reinforcing layer having a predetermined length (for example, 30 cm) in a tire is taken out from a tire and tension required for extending the constricted cord(s) by the above processes to its original predetermined length by a tension test machine is measured as the residual tension.

The present invention aims to solve such problems of conventional tires and its object is to provide a pneumatic tire capable of restraining difference in the amount of radial expansion of a belt reinforcing layer in a tread central region and the belt reinforcing layer in tread side regions so as to effectively preventing breakage in the tread side regions, and to provide a method for producing such a tire.

A pneumatic tire according to the present invention comprises a tread portion, sidewall portions extending continuously from each side of the tread portion inward in a radial direction of the tire, bead portions each continuing into an inner circumference of each sidewall portion, a carcass toroidally extending from one bead portion to the other bead portion to reinforce the tread portion, the sidewall portions and the bead portions, a belt consisting of one or more belt layers disposed on an outer circumference of a crown area of this carcass, and a belt reinforcing layer formed by spirally winding one or more cords in an axial direction of the tire and covering at least a part of the belt in a width direction of the tire on an outer circumference of the belt, wherein the cord of the belt reinforcing layer is formed by twisting low elastic fibers such as nylon, polyethylene terephthalate, polyvinyl alcohol or the like and high elastic fibers such as aromatic polyamide, wholly aromatic polyester, higher elastic polyvinyl alcohol than those mentioned above, carbon or the like to have a low elastic region and a high elastic region in a stress-strain curve, both of the belt reinforcing layer cord in a tread central region including a tire equatorial plane, for example, having the width of at least 10% of the tread width and the belt reinforcing layer cord in tread side regions, for example, each having the width of 5% to 10% of the tread width have residual tension of a range between 40N and 100N, preferably a range between 40N and 70N, per cord and difference in the residual tension of the belt reinforcing layer cord in the tread central region and the belt reinforcing layer cord in the tread side regions is not more than 20N, preferably not more than 10N.

In this case, it is preferable that the belt reinforcing layer cord in the tread side regions has larger residual tension than that of the belt reinforcing layer cord in the tread central region.

In addition, a method for producing a pneumatic tire according to the present invention comprises the step of rubberizing at least one belt reinforcing layer cord, or plurality of cords arranged in parallel to each other formed by twisting low elastic fibers and high elastic fibers as mentioned above to have a low elastic region and a high elastic region in a stress-strain curve, and spirally winding the rubberized cord(s) around a building drum having a convex curved surface in its central portion, in an axial direction of the drum, for example, from one end to the other end of the drum or from the axial center to the both sides of the drum to build a belt reinforcing layer member in a building process of a green tire.

In the pneumatic tire according to the present invention, since the residual tension of both of the belt reinforcing layer cord in the tread central region and the belt reinforcing layer cord in the tread side regions is set within a range between 40N and 100N and the difference in the residual tension of both of the cords is set not more than 20N, the tension in the circumferential direction of the tire can be sufficiently equalized over the width direction of the tire so that the radial expansion of the tread portion during high-speed running can be sufficiently equalized over the width direction of the tread portion, which results in effectively preventing breakage in the tread central and side regions and significantly improving abrasion resistance.

When the belt reinforcing layer cord has residual tension of less than 40N, the cord cannot exert its reinforcing function to the belt due to excessively low residual tension so that it is difficult to realize the expected high-speed durability. On the other hand, the belt reinforcing layer has residual tension of more than 70N, due to excessively large residual tension, separation between the belt reinforcing layer and the belt layer is easily generated under limited interlaminar rubber thickness.

When the difference in the residual tension of the belt reinforcing layer cord in the tread central region and the belt reinforcing layer cord in the tread side regions is more than 20N, the amount of radial expansion of cords during high-speed running varies so largely in the width direction of the tread portion that it becomes difficult to realize the expected high-speed durability and abrasion resistance.

In this tire, the residual tension having the above-mentioned range (40N to 100N) can be easily realized by twisting both of low elastic fibers and high elastic fibers to form the belt reinforcing layer cord.
If the belt reinforcing layer cord is formed only by low elastic fibers such as nylon, polyethylene terephthalate or the like, an amorphous part of fibers of the cord is extended and deformed in radially expanding deformation during vulcanization molding to produce permanent distortion depending on the amount of radial expansion and therefore it becomes impossible to provide residual tension mentioned above. On the contrary, if the belt reinforcing layer cord is formed only by high elastic fibers such as aromatic polyamide or the like, the residual tension will be excessively large.

Since the belt reinforcing layer cord has a low elastic region and a high elastic region in a stress-strain curve, during high-speed running of a vehicle, wherein the belt reinforcing layer cord has larger tension ratio, it is possible to effectively restrain radial expansion. On the other hand, in a low-speed running state, wherein the belt reinforcing layer cord has lower tension ratio, the binding force by the belt reinforcing layer is effectively restrained and the belt and the tread portion are comparatively freely deformed so as to improve ride comfort during low-speed running and to obtain excellent durability.

In this case, a transition point from the low elastic region to the high elastic region preferably exists in a range between 2% and 7% of the tension ratio of the belt reinforcing layer cord, more preferably in a range between 2% and 4%.
When the transition point is less than 2%, the binding force in the entire region of the tread is significantly increased in a normal running state and the stiffness of the belt is also increased so that deformation directly under the load is easily concentrated in the side portions and it is concerned that durability of the side portions is reduced.
On the other hand, when the transition point exceeds 7%, the tread central region radially expands so largely in a normal running state that it is likely to cause early breakdown in the region.

In such tire, when the belt reinforcing layer cord in the tread side regions has larger residual tension by not more than 20N than that in the tread central region, radial expansion of the tread side region, where mass of rubber is especially increased, during high-speed running can effectively restrained.

It may be possible to control residual tension of the belt reinforcing layer cord in the above-mentioned pneumatic tire by adjusting the winding tension of the belt reinforcing layer cord in consideration of the circumferential length of a product tire, by changing the thread density of the belt reinforcing layer cord depending on a widthwise location of the tread portion and the like, in a building process of a green tire, more directly in a building process of a belt reinforcing layer member. However, it is possible to easily and surely control the residual tension of the cord in a product tire by spirally winding the belt reinforcing layer cord around a building drum having a convex curved surface in its central portion under constant tension to build a belt reinforcing layer member.

In other words, in winding the cord by adjusting the winding tension of the cord and also in changing the thread density of the cords depending on a winding location of the tread portion, the operation of winding the cords is troublesome as well as it is difficult to improve the control accuracy of tension. However, the above-mentioned problems can be fully solved when the belt reinforcing layer cord is wound around a building drum having a convex curved surface, with constant tension and constant thread density.

### BRIEF DESCRIPTION OF THE DRAWINGS

Fig. 1 is a widthwise sectional view of a tire showing an embodiment of a tire according to the present invention.
Fig. 2 is a graph showing a stress-strain curve of a belt reinforcing layer cord.
Fig. 3 is a side view of a building drum with a part of a radially sectional view showing an embodiment of a method according to the present invention.

### DESCRIPTION OF REFERENCE NUMERALS

- 1: tread portion
- 2: sidewall portion
- 3: bead portion
- 4: bead core
- 5: carcass
- 6: belt
- 6a, 6d: belt layer
- 7: belt reinforcing layer
- 7a: cap
- 7b: layer
- 11: belt reinforcing layer cord
- 12: ribbon-like strip
- 13: building drum
- 13 a: curved surface
- 14: belt material
- 15: belt reinforcing layer member
- E: tire equatorial plane
- W: tread width
- w₀: tread central region
- w₁: tread side region

### BEST MODE FOR CARRYING OUT THE INVENTION

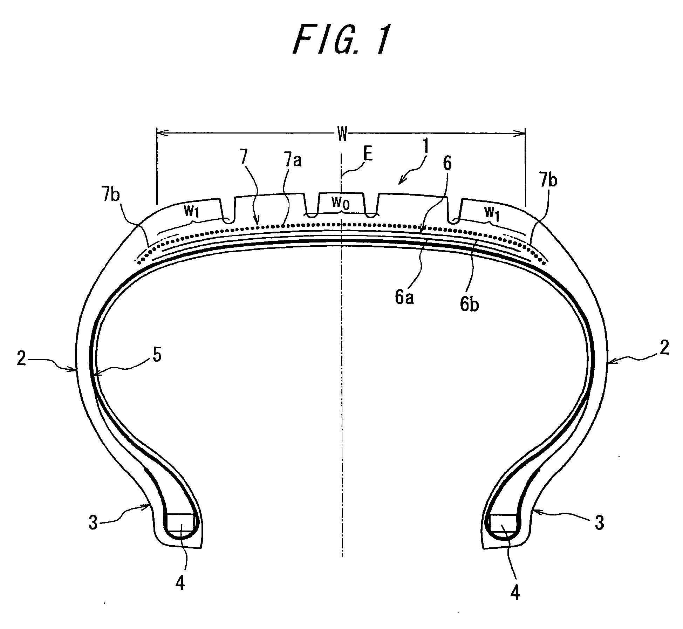

Fig. 1 is a widthwise sectional view of a tire showing an embodiment of a tire according to the present invention. In Fig. 1, the reference numeral 1 denotes a tread portion, the reference numeral 2 denotes a pair of sidewall portions extending continuously from each side of the tread portion 1 inward in a radial direction of the tire and the reference numeral 3 denotes bead portions each continuing into an inner circumference of each sidewall portion 2.

The reference numeral 4 denotes ring-shaped bead cores, each of which is embedded in each bead portion 3 and the reference numeral 5 denotes a carcass, which may have a radial structure, consisting of one or more carcass plies and toroidaly extending between the both bead cores with each side portion of the carcass turning around each of the bead cores 4.

In addition, a belt 6 consisting of two belt layers 6a, 6b is disposed on an outer circumference of a crown area of this carcass 5 and a belt reinforcing layer 7 consisting of a cap 7a covering the full width of the belt 6 in Fig. 1 is disposed on further outer circumference of this belt 6.

The number, the width and the like of the cap 7a forming the belt reinforcing layer 7 may be arbitrarily selected. Such cap 7a and one or more layers 7b overlapped in the both sides of the cap 7a as shown in Fig. 1 by virtual lines may form the belt reinforcing layer 7.

Alternatively, one or more layers, not shown, disposed with a spacing therebetween in the width direction of the tread may form the belt reinforcing layer 7.

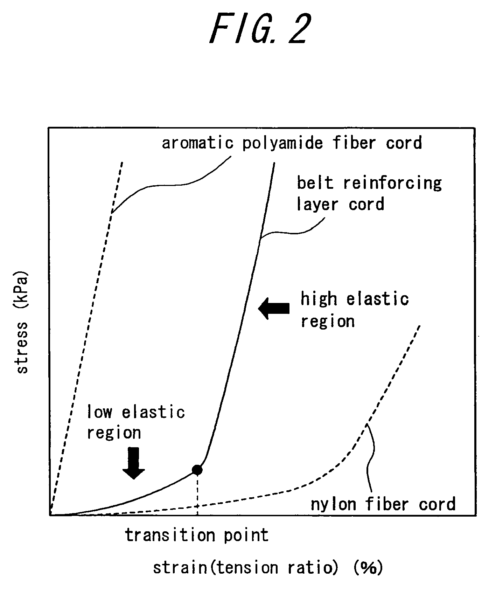

Such belt reinforcing layer 7 is formed by spirally winding one or more cords arranged in parallel to each other in an axial direction of the tire, and the cords of the belt reinforcing layer are formed by twisting low elastic fibers such as nylon, polyethylene terephthalate or the like and high elastic fibers such as aromatic polyamide, wholly aromatic polyester or the like to have a low elastic region, in which strain is low, and a high elastic region, in which strain is high, in a stress-strain curve, one example of which is shown in Fig.2.
In such cords, a transition point from the low elastic region to the high elastic region preferably exists in a range between 2% and 7% of cord tension ratio, more preferably in a range between 2% and 4%.

Inside a tire, the cord of each belt reinforcing layer in a tread central region w₀ including a tire equatorial plane E, for example, having the width of at least 10% of the tread width W with the tire equatorial plane E being its center, and the belt reinforcing layer cord in tread side regions w₁, for example, having the width of 5% to 10% of the tread width W as measured from a location corresponding to a tread contact end to the tire equatorial plane E have residual tension of a range between 40N and 100N, preferably a range between 40N and 70N, per cord and difference in the residual tension of the belt reinforcing layer cord in the tread central region w₀ and the belt reinforcing layer cord in the tread side regions w₁ is not more than 20N.

It is preferable that the belt reinforcing layer cord in the tread side regions w₁ has larger residual tension than that of the belt reinforcing layer cord in the tread central region w₀.

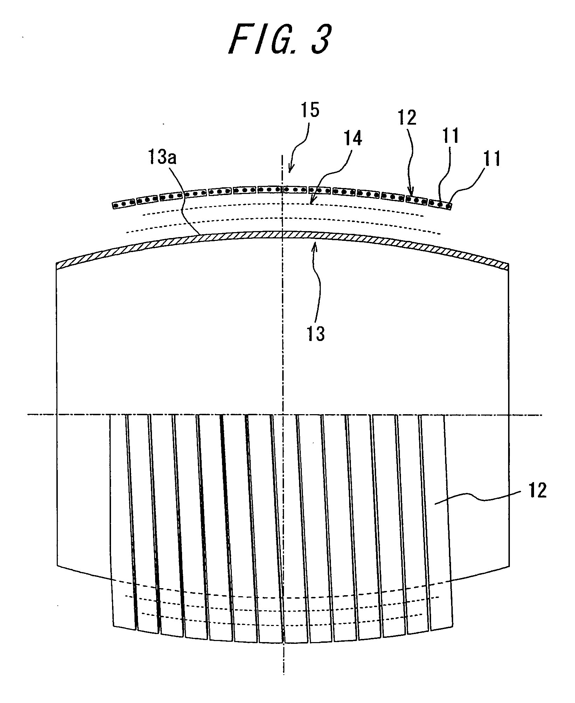

In a method according to the present invention for producing such pneumatic tire having the above-mentioned configuration, a belt reinforcing layer cord having the twisting formation and the elastic properties as mentioned above is prepared, for example, as shown in Fig. 3, schematically illustrating a side view of a building drum 13 with a part of a radially sectional view, a plurality of cords 11 arranged in parallel to each other are integrally rubberized to form a ribbon-like strip 12 having the width of 2 to 15 mm and this ribbon-like strip 12 is spirally wound around the building drum 13 having a convex curved surface 13a in its central portion, which is approximated by an inner shape of a product tire, on the preformed belt material 14 in an axial direction of the drum to build a belt reinforcing layer member 15 in a predetermined range and with a predetermined aspect.

Thus-built belt reinforcing layer member 15 has a longer circumferential length in the central portion corresponding to the tread central region of a product tire than that in the side portions corresponding to the tread side regions of a product tire, so that in vulcanization molding of thus-built green tire, even if the central portion of the belt reinforcing layer member 15 radially expands, it is possible to surely obtain the desired residual tension of the belt reinforcing layer cord in a product tire.

In order to make the residual tension of the cord in the tread side regions larger than that in the tread central region in a product tire, it is possible to select a form of the belt reinforcing layer member depending on the form of a product tire in such a manner that the belt reinforcing layer member 15 radially expands largely in the side portions than in the central portion during vulcanization molding of a green tire.

### EXAMPLE 1

Example tire and Comparative Example tire having a size of 215/45 R17 are prepared and each of them is mounted on a rim of 7Jx17 and filled with air at an air pressure of 200kPa under the load of 4.0kN. Then, high-speed durability and abrasion resistance of each tire are measured to provide results in index values as shown in table 1.
It is noted that the larger index value means the better result with using the value of Comparative Example tire 1 as control.
In addition, the parameters of Example tire and Comparative Example tire are shown in table 1.

The belt reinforcing layer member of Example tire is built on a building drum having a convex curved surface as shown in FIG. 3. The convex curved surface of the building drum has a radius of curvature of 1900mm in a center region having the width of 100mm with the drum center being as its center and a radius of curvature of 220mm in the axial end regions outside of the center region.

The high-speed durability is obtained by accelerating the speed by 10 km/h every five minutes from the speed of 120 km/h in a drum test and measuring the speed at the time of a breakdown. In addition, the abrasion resistance is obtained by measuring the running distance until the tread surface of an actual vehicle is completely worn out.

**[Table 1]**

| | Example tire 1 | Example tire 2 | Comparative Example tire 1 | Comparative Example tire 2 |
|---|---|---|---|---|
| belt reinforcing layer cord | (aromatic polyamide fiber 1670dtex x2 + nylon 940dtex)/3 | (aromatic polyamide fiber 1670dtex x2 + nylon 940dtex)/3 | (aromatic polyamide fiber 1670dtex x2 + nylon 940dtex)/3 | nylon 1400dtex/2 |
| residual tension in tread central region [N] | 80 | 60 | 80 | 25 |
| residual tension in tread side region [N] | 70 | 70 | 40 | 15 |
| high-speed durability (index) | 119 | 130 | 100 | 88 |
| abrasion resistance (index) | 128 | 131 | 100 | 110 |

It is apparent from the results of table 1 that all of Example tires can significantly improve the high-speed durability and abrasion resistance under the appropriate selection of residual tension in comparison with Comparative Example tires.

## Claims

1. A pneumatic tire comprising
a tread portion,
a pair of sidewall portions extending continuously from each side of the tread portion inward in a radial direction of the tire,
bead portions each continuing into an inner circumference of each sidewall portion,
a carcass toroidally extending from one bead portion to the other bead portion to reinforce the tread portion, the sidewall portions and the bead portions,
a belt consisting of one or more belt layers disposed on an outer circumference of a crown area of this carcass, and
a belt reinforcing layer formed by spirally winding one or more cords in an axial direction of the tire, the belt reinforcing layer covering at least a part of the belt on an outer circumference of the belt in a width direction of the tire, wherein
the cord of the belt reinforcing layer is formed by twisting low elastic fibers and high elastic fibers to have a low elastic region and a high elastic region in a stress-strain curve, both of the belt reinforcing layer cord in a tread central region including a tire equatorial plane and the belt reinforcing layer cord in a tread side region have residual tension of a range between 40N and 100N per cord and difference in the residual tension of the belt reinforcing layer cord in the tread central region and the belt reinforcing layer cord in the tread side regions is not more than 20N.

2. The pneumatic tire according to claim 1 wherein the belt reinforcing layer cord in the tread side regions has larger residual tension than that of the belt reinforcing layer cord in the tread central region.

3. A method for producing a pneumatic tire comprising the step of rubberizing at least one belt reinforcing layer cord formed by twisting low elastic fibers and high elastic fibers to have a low elastic region and a high elastic region in a stress-strain curve, and spirally winding the rubberized cord(s) around a building drum having a convex curved surface in its central portion, in an axial direction of the drum to build a belt reinforcing layer member in a building process of a green tire,
